# EUROPÄISCHE PATENTSCHRIFT

(11) **EP 2 210 816 B1**
(45) Veröffentlichungstag und Bekanntmachung des Hinweises auf die Patenterteilung: **22.06.2016**
(21) Anmeldenummer: 10151359.6
(22) Anmeldetag: 22.01.2010
(51) Int. Cl.: B65D 1/02

(54) **Behältnis mit Mündungsnut**
Container provided with a groove in the neck zone
Récipient doté d'une cannelure dans son col

(30) Priorität: 23.01.2009 DE 102009006004
(43) Veröffentlichungstag der Anmeldung: 28.07.2010
(73) Patentinhaber: Krones AG, 93073 Neutraubling (DE)
(72) Erfinder: Zepf, Georg, 93095, Hagelstadt (DE); Knieling, Erwin, 93102, Pfatter (DE)
(74) Vertreter: Bittner, Bernhard

(56) Entgegenhaltungen:
- EP-A1- 2 100 707
- WO-A1-2008/095842
- DE-A1-102005 051 735
- DE-U- 7 514 598
- DE-U1-202007 009 983
- US-A1- 2004 108 295
- US-A1- 2007 080 128

## Beschreibung

Die vorliegende Erfindung betrifft ein Behältnis, beispielsweise eine Kunststoffflasche, zur Aufbewahrung von Flüssigkeiten oder Getränken, gemäß dem Oberbegriff des Schutzanspruches 1. Derartige Kunststoffbehältnisse umfassen insbesondere PET-Flaschen, welche mittels eines thermischen Verfahrens aus einer PET-Preform hergestellt werden. Sie werden seit Mitte der 1990er Jahre unter anderem als Verpackungsmittel in der Getränkeindustrie zunehmend eingesetzt. Unter dem Begriff Behältnis wird neben der eigentlichen Flasche auch der Preform bzw. Vorformling verstanden.

Um die einzelnen Behältnisse bzw. Preforms handhaben und behandeln zu können, weisen diese im Stand der Technik einen meist umlaufenden Kragen auf. Dieser ringförmige Kragen wird verwendet, um das Behältnis beispielsweise mit einem Greifarm zu greifen und an einen weiteren Greifarm weitergeben zu können. Insbesondere wird dieser auch als Tragring bezeichnete Kragen zum Handling einer Flasche verwendet. Dabei wird in der Regel von einer Klammer, welche das Behältnis umgreift, zur nächsten gewechselt, wobei eine Klammer unterhalb des Tragringes greift und eine Klammer oberhalb des Tragringes zwischen dem Tragring und einem meist oberhalb des Tragrings angeordneten Sicherungsring greift. Dieser Sicherungsring ist gegenüber dem Tragring wesentlich kleiner und somit auch materialsparender ausgebildet.

Damit dient ein solcher Tragring, der üblicherweise auch im fertigen Produkt sichtbar ist, ausschließlich dem Herstellungs- und Befüllungsprozess der Behältnisse. Andererseits benötigt dieser Tragring auch eine erhebliche Menge an Kunststoffmaterial. Dabei ist insbesondere zu beachten, dass eine Preform in demjenigen Bereich, in dem dieser Tragring angeordnet ist, unverstreckt bleibt und damit eine große Menge an Material in dem Tragring verbleibt.

Aus der Druckschrift DE 20 2007 009 983 U1, deren Offenbarung durch Bezugnahme vollständig in vorliegende Schrift aufgenommen wird, ist bereits ein Behältnis bekannt, welches einen Grundkörper und ein Gewinde aufweist, bei welchem ein wenigstens abschnittsweise umlaufender Sicherungsring vorgesehen ist, der sich bezüglich des Grundkörpers des Behältnisses nach außen erstreckt, wobei der wenigstens abschnittsweise umlaufende Sicherungsring in einer Längsrichtung des Behältnisses zwischen dem Gewinde und dem Grundkörper angeordnet und in der Längsrichtung des Behältnisses von dem Gewinde beabstandet ist. Dabei weist das Behältnis insbesondere zwischen dem Grundkörper und dem umlaufenden Sicherungsring eine wenigstens abschnittsweise umlaufende Nut auf, wobei diese Nut einen geringeren Außenquerschnitt als der Sicherungsring und einen geringeren Außenquerschnitt als das Gewinde aufweist.

Aus der US 2004/0108295 A1 ist ein Kunststoffbehälter mit einem Endteil und einem Grundkörper bekannt, wobei das Endteil einteilig mit dem Grundkörper ausgebildet ist.

Der vorliegenden Erfindung liegt daher die Aufgabe zugrunde, ein Behältnis zur Verfügung zu stellen, welches eine höhere Materialeinsparung erlaubt und insbesondere ein Behältnis zur Verfügung zu stellen, welches auf den erwähnten Tragring verzichtet.

Diese Aufgabe wird gemäß den Merkmalen des Schutzanspruches 1 gelöst. Vorteilhafte Ausführungsformen und Weiterbildungen sind Gegenstand der Unteransprüche

Das erfindungsgemäße Behältnis besteht aus einem Grundkörper und einer Mündung, einem an einem Außenumfang der Mündung angeordneten Gewinde, wobei unterhalb des Gewindes ein sich bezüglich des Außenumfangs der Mündung wenigstens gleich weit nach außen erstreckender Sicherungsring angeordnet ist, und einer wenigstens abschnittsweise umlaufenden Nut. Dabei ist die Nut erfindungsgemäß zwischen dem Außenumfang der Mündung und dem Sicherungsring vorgesehen und weist einen geringeren Außenquerschnitt als das Gewinde auf.

Der Sicherungsring erstreckt sich dabei im Wesentlichen radial nach außen. Der Sicherungsring dient vorzugsweise auch gleichzeitig dazu, um beim Öffnen der Flasche eine Versiegelung des Flaschenverschlusses zu öffnen.

Dabei ist es möglich, dass sich der Sicherungsring in radialer Richtung über den Außenumfang hinaus nach außen erstreckt, es wäre jedoch auch möglich, dass der Sicherungsring einteilig mit dem Außenumfang ausgebildet ist bzw. in der radialen Richtung bündig mit dem Außenumfang abschließt. In diesem Fall kann das Sicherungsband unterhalb des Sicherungsrings in eine entsprechende Nut eingreifen. Mit anderen Worten übernimmt hier der Außenumfang bzw. dessen dem Grundkörper zugewandter Bereich die Funktion des Sicherungsrings. Vorzugsweise ist hier der Sicherungsring ein Bestandteil bzw. Abschnitt des Außenumfangs. Es wäre auch möglich, dass der Sicherungsring gegenüber dem Außenumfang in radialer Richtung geringfügig zurückgezogen ist.

Durch das Vorsehen dieser Nut ist es möglich, dass mit einem speziell angepassten Eingriffsmittel in diese Nut eingegriffen wird, um das Behältnis zu transportieren oder allgemein zu behandeln und dass durch diesen Eingriff das Gewinde selbst nicht beschädigt wird. Dabei liegt das Eingriffsmittel bevorzugt von unten her am Gewindekern an, so dass der Gewindegang selbst nicht berührt wird. Darüber hinaus erübrigt sich aufgabengemäß die Einarbeitung eines Kragens bzw. Tragringes.

Vorzugsweise ist unterhalb des Gewindes kein sich über den Außenquerschnitt des Gewindes hinaus erstreckendes Element vorgesehen.

Weiterhin bevorzugt ist unterhalb des Gewindes und des Sicherungsringes kein weiteres sich nach außen über den Außenquerschnitt des Gewindes hinaus erstreckendes, umlaufendes Element angeordnet.

Bevorzugt ist das Behältnis, wie erwähnt, aus Kunststoff hergestellt.

Vorzugsweise weist die Nut einen geringeren Außenquerschnitt als die Mündung auf. Damit weist besonders bevorzugt das Behältnis entlang seiner Längsrichtung im Bereich der Nut vollumfänglich einen geringeren Außenumfang auf.

Daher ist das erfindungsgemäße Behältnis derart ausgestattet, dass es von unterschiedlichen Greifeinrichtungen auf unterschiedlichen Höhen in Längsrichtung des Behältnisses gegriffen werden kann, ohne dass dabei das Gewinde selbst berührt bzw. beschädigt wird. Insbesondere wird durch die Nut erreicht, dass das Behältnis auf einer genau definierten Höhe gegriffen wird.

Vorzugsweise ist die Nut vom Sicherungsring derart beabstandet, dass beispielsweise ein Verschlussdeckel über den Sicherungsring hinausragen kann, die Nut aber vom Verschlussdeckel unbedeckt bleibt. Damit kann beispielsweise eine Greifeinrichtung auch ein bereits mit einem Verschlussdeckel verschlossenes Behältnis greifen und transportieren.

Bevorzugt weist die Nut wenigstens abschnittsweise geradlinig verlaufende Begrenzungswände auf. Damit ist ein präziser Eingriff einer Greifeinrichtung in die Nut und somit ein stabiler Halt des Behältnisses während eines Transportvorganges gewährleistet.

Dies wird vorzugsweise dadurch unterstützt, in dem die Nut im Querschnitt die Gestalt eines offenen Rechtecks bzw. zwei rechte Winkel aufweist.

Das Behältnis weist bevorzugt eine Innenwandung auf, welche in Längsrichtung des Behältnisses mindestens eine Verjüngung aufweist, wobei sich besonders bevorzugt der Innenquerschnitt der Verjüngung kontinuierlich verändert. Diese Verjüngung ist bevorzugt in dem Bereich der Nut vorgesehen.

Zudem ist die Nut im Bereich Ihres Außenumfangs bzw. des Nutgrundes vorzugsweise strukturiert, wobei die Oberfläche des Außenumfangbereichs der Nut beispielsweise eine Längsriffelung aufweisen kann, die einer Greifeinrichtung ein sicheres und stabiles Eingreifen in die Nut erlaubt Weiterhin weist das Behältnis erfindungsgemäß einen Verschluss auf, welcher in geschlossenem Zustand oberhalb der Nut abschließt. Damit kann beispielsweise eine Greifeinrichtung auch ein bereits mit einem Verschluss verschlossenes Behältnis greifen und transportieren.

Weitere Vorteile und Zweckmäßigkeiten sind der nachfolgenden Beschreibung in Verbindung mit den Zeichnungen zu entnehmen. Hierbei zeigen:
- Fig. 1a: ein Behältnis nach dem Stand der Technik;
- Fig. 1b: eine Querschnittsansicht eines Behältnisses nach dem Stand der Technik;
- Fig. 2: einen Querschnitt eines erfindungsgemäßen Behältnisses;
- Fig. 3: eine Gegenüberstellung eines Behältnisses nach dem Stand der Technik und eines erfindungsgemäßen Behältnisses;
- Fig. 4: eine Seitenansicht eines erfindungsgemäßen Behältnisses;
- Fig. 5: eine weitere Ausführungsform eines erfindungsgemäßen Behältnisses;
- Fig. 6a-c: zwei Darstellungen einer Nut.

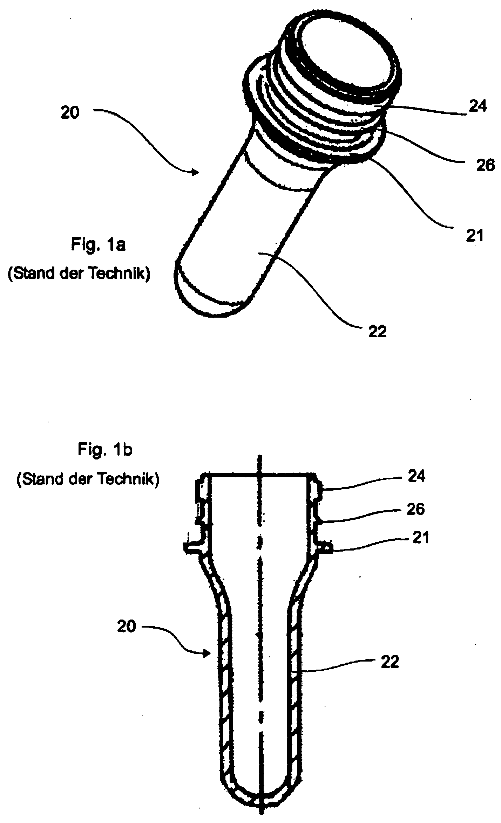

Fig. 1a zeigt eine perspektivische Ansicht eines Behältnisses 20 nach dem Stand der Technik. Dieses Behältnis 20 weist einen Grundkörper 22 und ein Gewinde 24 auf. Zwischen diesem Gewinde 24 und dem Grundkörper 22 sind ein Tragring 21 und ein Sicherungsring 26 vorgesehen. Dieses Behältnis 20 wird im Laufe des Herstellungsverfahrens zu einer Kunststoffflasche expandiert, wobei jedoch die Gestalt einschließlich des Tragrings 21 und oberhalb des Tragrings 21 bei dem Expansionsvorgang beibehalten bleibt. Man erkennt, dass der Tragring 21 erheblich radial nach außen ragt und damit eine große Menge an Material für diesen Tragring erforderlich ist.

Fig. 1b zeigt eine Querschnittsansicht des in Fig. 1a gezeigten Behältnisses 20. Da dieses Behältnis in einem zweistufigen Verfahren mit mehreren Greifklammern befördert wird, ist es möglich, dass eine bestimmte Greifklammer unterhalb des Tragrings 21 eingreift und eine weitere Greifklammer zwischen dem unteren Tragring 21 und dem Sicherungsring 26. Auf diese Weise kann ein Eingriff in das Gewinde 24 vermieden und dieses damit geschont werden.

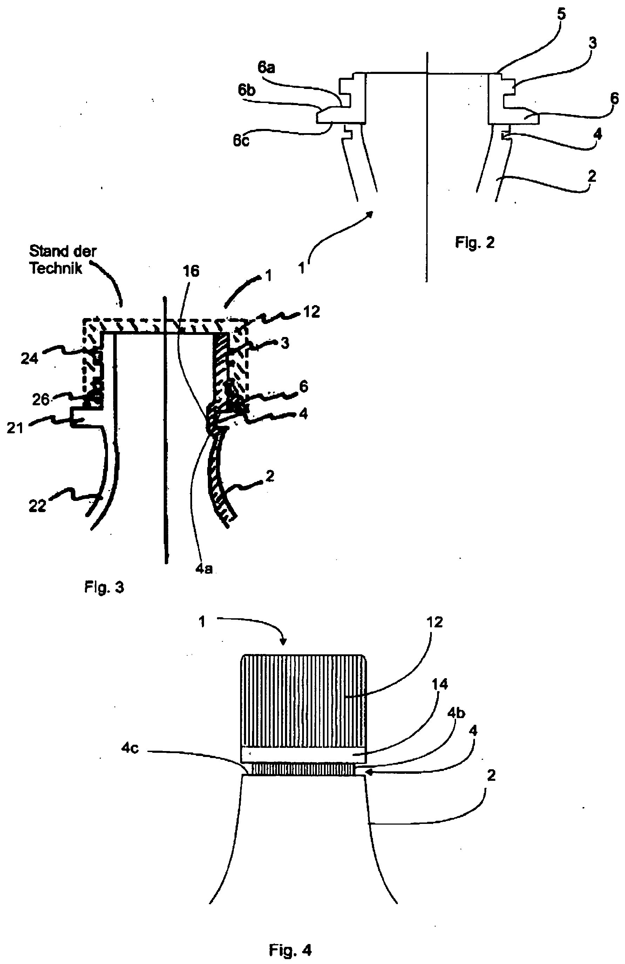

Fig. 2 zeigt eine Querschnittsansicht eines erfindungsgemäßen Behältnisses 1, welches einen expandierbaren Grundkörper 2 und ein Gewinde 3 aufweist. Zwischen dem Gewinde 3 und dem Grundkörper 2 ist ein Sicherungsring 6 vorgesehen. Zwischen dem Grundkörper 2 und dem Sicherungsring 6, also unterhalb des Sicherungsringes 6, ist erfindungsgemäß eine Nut 4 vorgesehen, in die eine Greifeinrichtung zum Transport des Behältnisses 1 greifen kann. Damit ist es möglich, bei der erfindungsgemäßen Ausführungsform auf das Vorsehen eines Tragrings, wie im Stand der Technik, zu verzichten. Es wird darauf hingewiesen, dass diese Nut 4 in Fig. 2 umlaufend ausgeführt ist, es ist jedoch auch möglich, eine teilweise unterbrochene Nut vorzusehen. Das Bezugszeichen 5 bezieht sich auf die Mündung des Behältnisses 1. Ausgehend von dem Außenumfang dieser Mündung erstreckt sich das Gewinde 3.

Fig. 3 zeigt eine Gegenüberstellung eines erfindungsgemäßen Behältnisses (rechter Teil von Fig. 3) und eines Behältnisses nach dem Stand der Technik (linker Teil von Fig. 3), wobei hier auch ein Verschluss 12 des Behältnisses angedeutet ist. Man erkennt, dass bei beiden Varianten das Gewinde jeweils gleich ausgeführt ist. Es wird in diesem Zusammenhang darauf hingewiesen, dass sich grundsätzlich jedes gängige Behältnis und insbesondere jedes gängige Mundstück durch das erfindungsgemäße Prinzip modifizieren lässt. Dies bedeutet, dass auch auf das erfindungsgemäße Behältnis die frei am Markt verfügbaren Schraubverschlüsse angebracht werden können. Der Verschluss 12 weist ein Sicherungsband 14 auf, der bei beiden Varianten (sowohl beim Stand der Technik als auch bei der erfindungsgemäßen Ausführungsform) unterhalb des Sicherungsrings 6 eingreift.

Ferner ist Fig. 2 und Fig. 3 zu entnehmen, dass die Nut 4 gegenüber dem Sicherungsring 6 und dem Grundkörper 2 ausgebildet bzw. nach innen gezogen ist. Dieser Sicherungsring 6 weist gemäß Fig. 2 einen oberen radial nach außen verlaufenden Abschnitt 6a, einen unteren radial nach außen verlaufenden Abschnitt 6c sowie einen schräg verlaufenden Abschnitt 6b auf. Zum Transport der Behältnisse kann eine Greifeinrichtung in die Nut 4 eingreifen und damit wird ein direkter Kontakt mit dem Gewindegang des Gewindes 3 verhindert. Die Nut wird hier durch einen vertikal verlaufenden Nutgrund 4b, einen oberen radial verlaufenden Wandabschnitt 4a und einen unteren radial verlaufenden Wandabschnitt 4c gebildet.

In demjenigen Bereich, in dem die Nut 4 vorgesehen ist, ist der Behältnis - Innendurchmesser verringert, bzw. weist eine Verjüngung 16 auf, um in allen Bereichen des Behältnisses eine ausreichende Wanddicke zur Verfügung zu haben. Die Wanddicke des Behältnisses unterhalb des Sicherungsrings 6 liegt bevorzugt zwischen 1,5 mm und 5 mm, bevorzugt zwischen 2 mm und 4 mm und besonders bevorzugt bei ca. 3 mm.

In Fig. 4 ist in einer Seitenansicht ein erfindungsgemäßes Behältnis, welches zusätzlich mit einem Verschlussdeckel 12 versehen ist, dargestellt. Es ist leicht erkennbar, dass durch die Nut 4 erreicht werden kann, dass im Rahmen des Herstellungsverfahrens oder des Transportes der verschlusssensible Bereich des Gewindes nicht berührt und insbesondere nicht radial von außen berührt wird, und damit Verformungen dieses Bereiches vermieden werden. Die Nut 4 weist an ihrem Nutgrund 4b eine Struktur, hier in Form einer Längsriffelung, auf.

Die Tiefe der umlaufenden Nut 4 orientiert sich an dem minimalen Mundstücksinnendurchmesser, den man bereit ist zu akzeptieren. Die Nut 4 sollte insbesondere so groß bzw. so tief gewählt werden, dass eine sichere Funktion der verwendeten Klammersysteme gewährleistet ist. Durch das erfindungsgemäße Weglassen des Tragrings kann in Einzelfällen das Problem auftreten, dass auch kein Tragring mehr vorhanden ist, der das Sicherungsband 14 eines Flaschenverschlusses 12 vor Untergreifen schützt. Auf diese Weise könnten Manipulationen an diesem Sicherheitsband erleichtert werden. Um diese Sicherheit weiterhin beizubehalten, wäre es möglich, das verschlossene Mundstück anzusleeven bzw. mit einer Hülle an dem Behältnis anzuordnen. Genauer könnte eine Schrumpfhülle über dem Verschluss bzw. dem Kopf der Flasche angeordnet sein.

Bei einem erfindungsgemäßen Verfahren zum Transport des in Fig. 2 und 4 gezeigten Behältnisses 1 greift eine erste Greifeinrichtung unterhalb des Sicherungsrings 6 ein und kann das Behältnis beispielsweise an eine weitere Greifeinrichtung übergeben, die in die Nut 4 eingreift. Eine erfindungsgemäße Vorrichtung zum Transportieren von derartigen Behältnissen kann beispielsweise in Blasmaschinen, Etikettiermaschinen, Füllmaschinen, Heizeinrichtungen für die Behältnisse und dergleichen Anwendung finden. Wie in Fig. 2 gezeigt, weist auch der Grundkörper 2 einen sich verjüngenden Bereich auf. Diese Verjüngung kann bei dem erfindungsgemäßen Behältnis geringer ausgeführt werden als bei Behältnissen nach dem Stand der Technik, da bereits in dem Bereich der Nut 4 eine Verjüngung stattfindet.

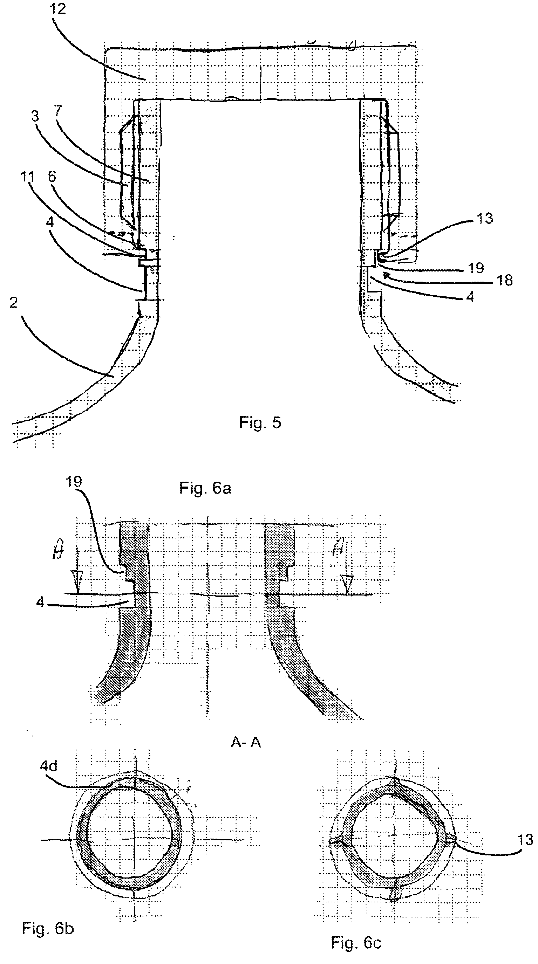

Fig. 5 zeigt eine weitere Ausführungsform eines erfindungsgemäßen Behältnisses. Bei dieser Ausführungsform ist der Sicherungsring nicht als gegenüber dem Außenumfang 7 hervorstehender Ring ausgebildet sondern der Sicherungsring schließt in radialer Richtung mit dem Außenumfang 7 der Mündung ab. Dies bedeutet, dass hier das Sicherungsband unterhalb des Außenumfangs 7 der Mündung einschnappen kann und daher die Unterseite des Außenumfangs 7 selbst als Sicherungsring wirkt.

In Figur 5 sind zwei Ausgestaltungen des Bereiches unterhalb des Sicherungsrings 6 dargestellt. Bei der auf der linken Seite der Figur gezeigten Ausführungsform ist unterhalb des (hier den Sicherungsring bildenden) Außenumfangs neben der Nut 4, welche für den Eingriff der Greifklammer dient, eine weitere Nut 11 vorgesehen, in welche ein Abschnitt des Sicherungsbandes eingreift.

Bei der auf der rechten Seite gezeigten Ausgestaltung ist ein zweistufiger Absatz 18, dessen untere Stufe die Nut 4 ausbildet, vorgesehen. In die obere Stufe 19 greift hier das Sicherungsband des Verschlusses bzw. der Abschnitt 13 des Sicherungsbandes ein. Die obere Stufe bzw. Einschnürung 19 hat dabei zwei Funktionen. Erstens schnappt, wie erwähnt, dass Sicherungsband in diese Einschnürung ein, so dass der Verschluss nicht zerstörungsfrei von der Flasche entfernt werden kann. Weiterhin können in diese obere Stufe bzw. Einschnürung auch die Flaschenhalteklammern der Transfersterne eingreifen.

Die zweite Stufe bzw. die Nut 4 dient als Eingriff für die Flaschenhalteklammern.

Die Figuren 6a - 6c zeigen drei weitere Darstellungen der unteren Ausnehmung bzw. der Nut 4. Optional ist es möglich, in die zweite Abstufung d.h. die Nut 4 eine Kontur 4d bzw. ein Profil zu integrieren, die als kraft-, reib- und/oder formschlüssige Verbindung dient, beispielsweise beim Verschließen der als Verdrehsicherung wirkt. So können, wie in Fig. 6b gezeigt, in der Nut bzw. dem Nutgrund Rillen 4d oder sonstige Konturen ausgebildet sein, welche den Reib- bzw. Formschluss erhöhen. Auch könnten, wie in Fig. 6c gezeigt, über den Umfang des Nutgrunds verteilt als Kontur wirkende Vorsprünge 13 angeordnet sein.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

## Patentansprüche

1. Behältnis (1) bestehend aus einem Grundkörper (2) und einer Mündung (5), einem an einem Außenumfang der Mündung (5) angeordneten Gewinde (3), wobei unterhalb des Gewindes (3) ein sich bezüglich des Außenumfangs der Mündung (5) wenigstens gleich weit nach außen erstreckender Sicherungsring (6) angeordnet ist, , und einer wenigstens abschnittsweise umlaufenden Nut (4), wobei die Nut (4) zwischen dem Grundkörper (2) und dem Sicherungsring (6) vorgesehen ist, und in die Nut (4) eine Greifeinrichtung zum Transport des Behältnisses (1) eingreifen kann, **dadurch gekennzeichnet, dass** die Nut (4) einen geringeren Außenquerschnitt als das Gewinde (3) aufweist, wobei das Behältnis (1) einen Verschluss (12) aufweist, welcher in geschlossenem Zustand oberhalb der Nut (4) abschließt, wobei die Nut (4) vom Sicherungsring (6) beabstandet ist.

2. Behältnis (1) nach Anspruch 1, **dadurch gekennzeichnet, dass** unterhalb des Gewindes (3) und des Sicherungsringes (6) kein weiteres sich nach außen über den Außenquerschnitt des Gewindes (3) hinaus erstreckendes, umlaufendes Element angeordnet ist.

3. Behältnis (1) nach wenigstens einem der vorangegangenen Ansprüche, **dadurch gekennzeichnet, dass** das Behältnis (1) aus Kunststoff hergestellt ist.

4. Behältnis (1) nach wenigstens einem der vorangegangenen Ansprüche, **dadurch gekennzeichnet, dass** die Nut (4) einen geringeren Außenquerschnitt als die Mündung (5) aufweist.

5. Behältnis (1) nach wenigstens einem der vorangegangenen Ansprüche, **dadurch gekennzeichnet, dass** die Nut (4) wenigstens abschnittsweise geradlinig verlaufende Begrenzungswände (4a, 4b, 4c) aufweist.

6. Behältnis (1) nach wenigstens einem der vorangegangenen Ansprüche, **dadurch gekennzeichnet, dass** die Nut (4) die Gestalt eines offenen Rechtecks aufweist.

7. Behältnis (1) nach wenigstens einem der vorangegangenen Ansprüche, **dadurch gekennzeichnet, dass** das Behältnis (1) eine Innenwandung aufweist, welche in Längsrichtung des Behältnisses (1) mindestens eine Verjüngung (16) aufweist.

8. Behältnis (1) nach Anspruch 7, **dadurch gekennzeichnet, dass** sich der Innenquerschnitt der Verjüngung (16) kontinuierlich verändert.

9. Behältnis (1) nach wenigstens einem der vorangegangenen Ansprüche, **dadurch gekennzeichnet, dass** die Nut (4) im Bereich ihres Außenumfangs strukturiert ist.

10. Behältnis nach wenigstens einem der vorangegangenen Ansprüche, **dadurch gekennzeichnet, dass** der Sicherungsring (6) ein Abschnitt des Außenumfangs ist.

11. Behältnis nach wenigstens einem der vorangegangenen Ansprüche, **dadurch gekennzeichnet, dass** unterhalb des Außenumfangs neben der Nut (4) eine weitere Nut oder eine zweistufige Nut(18) vorgesehen ist, wobei die untere Stufe dieser zweistufigen Nut die Nut (4) ist

## Claims

1. A container (1) consisting of a base body (2) and a mouth (5), a thread (3) arranged on an external circumference of the mouth (5), wherein a securing ring (6) extending outwards at least over the same distance in relation to the outer circumference of the mouth (5), and a groove (4) circulating at least in sections are arranged, wherein the groove (4) is provided between the base body (2) and the securing ring (6), and the groove (4) can be engaged by a gripping device for transporting the container (1), **characterised in that** the groove (4) has a smaller outer cross section than the thread (3), wherein the container (1) has a closure cap (12) that terminates, in the closed condition, above the groove (4), wherein the groove (4) is spaced apart from the securing ring (6).

2. The container (1) as claimed in claim 1, **characterised in that** below the thread (3) and the securing ring (6), there is no further circulating element that extends outwards beyond the outer cross section of the thread (3).

3. The container (1) as claimed in at least one of the preceding claims, **characterised in that** the container (1) is made from plastics material.

4. The container (1) as claimed in at least one of the preceding claims, **characterised in that** the groove (4) has a smaller outer cross section than the mouth (5).

5. The container (1) as claimed in at least one of the preceding claims, **characterised in that** the groove (4) has boundary walls (4a, 4b, 4c) extending in a straight line at least in sections.

6. The container (1) as claimed in at least one of the preceding claims, **characterised in that** the groove (4) has the shape of an open rectangle.

7. The container (1) as claimed in at least one of the preceding claims, **characterised in that** the container (1) has an inner wall that has at least one tapering (16) in the longitudinal direction of the container (1).

8. The container (1) as claimed in claim 7, **characterised in that** the internal cross section of the tapering (16) changes continuously.

9. The container (1) as claimed in at least one of the preceding claims, **characterised in that** the groove (4) is structured in the area of the outer circumference thereof.

10. The container as claimed in at least one of the preceding claims, **characterised in that** the securing ring (6) is a section of the external circumference.

11. The container as claimed in at least one of the preceding claims, **characterised in that** below the outer circumference next to the groove (4), a further groove or a two-stepped groove (18) is provided, wherein the bottom step of this two-stepped groove is the groove (4).

## Revendications

1. Contenant (1) constitué d'un corps de base (2) et d'une embouchure (5), d'un filet (3) agencé sur une périphérie extérieure de l'embouchure (5), une bague de sûreté (6) s'étendant au moins de manière équidistante vers l'extérieur par rapport à la périphérie extérieure de l'embouchure (5) étant agencée au-dessous du filet (3), et d'une rainure (4) au moins en sections circulaire, la rainure (4) étant prévue entre le corps de base (2) et la bague de sûreté (6), et un dispositif de préhension permettant de transporter le contenant (1) pouvant s'insérer dans la rainure (4), **caractérisé en ce que** la rainure (4) présente une section transversale inférieure à celle du filet (3), le contenant (1) présentant une fermeture (12), laquelle, une fois fermée, se termine au-dessus de la rainure (4), la rainure (4) étant espacée de la bague de sûreté (6).

2. Contenant (1) selon la revendication 1, **caractérisé en ce qu'**aucun autre élément circulaire s'étendant vers l'extérieur au-delà de la section transversale extérieure du filet (3) n'est agencé au-dessous du filet (3) et de la bague de sûreté (6).

3. Contenant (1) selon au moins l'une des revendications précédentes, **caractérisé en ce que** le contenant (1) est fabriqué à partir d'une matière plastique.

4. Contenant (1) selon au moins l'une des revendications précédentes, **caractérisé en ce que** la rainure (4) présente une section transversale extérieure inférieure à celle de l'embouchure (5).

5. Contenant (1) selon au moins l'une des revendications précédentes, **caractérisé en ce que** la rainure (4) présente des parois de délimitation (4a, 4b, 4c) s'étendant au moins en sections de façon rectiligne.

6. Contenant (1) selon au moins l'une des revendications précédentes, **caractérisé en ce que** la rainure (4) présente la forme d'un rectangle ouvert.

7. Contenant (1) selon au moins l'une des revendications précédentes, **caractérisé en ce que** le contenant (1) présente une paroi intérieure, laquelle présente dans la direction longitudinale du contenant (1) au moins un rétrécissement (16).

8. Contenant (1) selon la revendication 7, **caractérisé en ce que** la section transversale intérieure du rétrécissement (16) varie en continu.

9. Contenant (1) selon au moins l'une des revendications précédentes, **caractérisé en ce que** la rainure (4) est structurée dans la zone de sa périphérie extérieure.

10. Contenant selon au moins l'une des revendications précédentes, **caractérisé en ce que** la bague de sûreté (6) est une section de la périphérie extérieure.

11. Contenant selon au moins l'une des revendications précédentes, **caractérisé en ce qu'**une autre rainure ou une rainure à deux étages (18) est prévue au-dessous de la périphérie extérieure en plus de la rainure (1), l'étage inférieur de cette rainure à deux étages étant la rainure (4).
